# EUROPÄISCHE PATENTSCHRIFT

(11) **EP 2 674 237 B1**
(45) Veröffentlichungstag und Bekanntmachung des Hinweises auf die Patenterteilung: **10.08.2016**
(21) Anmeldenummer: 13002889.7
(22) Anmeldetag: 05.06.2013
(51) Int. Cl.: B23D 61/02, A01D 34/73

(54) **Grasschneidblatt für einen Freischneider**
Grass cutting blade for a trimmer
Lame de débroussailleuse pour couper de l'herbe

(30) Priorität: 12.06.2012 DE 102012011465
(43) Veröffentlichungstag der Anmeldung: 18.12.2013
(73) Patentinhaber: Andreas Stihl AG & Co. KG, 71336 Waiblingen (DE)
(72) Erfinder: Stark, Thomas, 71336 Waiblingen (DE)
(74) Vertreter: Wasmuth, Rolf

(56) Entgegenhaltungen:
- BE-A- 499 862
- DE-U1- 20 020 731
- US-A- 3 002 541

## Beschreibung

Die Erfindung betrifft ein Schneidblatt für einen handgeführten Freischneider mit einem Antriebsmotor nach dem Oberbegriff des Anspruchs 1.

Ein derartiges Schneidblatt, auch als Grasschneidblatt bezeichnet, ist aus DE 2002 073U1 oder EP 1 219371 A2 bekannt. Das Schneidblatt weist auf seinem Umfang eine Vielzahl von Schneidzähnen auf, wobei jeder einzelne Schneidzahn eine in Antriebsrichtung vorlaufende Brustschneide und eine daran anschließende in Umfangsrichtung sich erstreckende Dachschneide aufweist. Die Brustschneide und die Dachsschneide laufen keilförmig aufeinander zu und bilden eine in Antriebsrichtung vorlaufende Schneidspitze. Die Brustschneide und die Dachschneide der aufeinanderfolgenden Zähne werden abwechselnd von der einen oder der anderen Seite des Schneidblattes angeschliffen.

Derartige Schneidblätter werden zum Schneiden von Gras, Gestrüpp oder auch jungem Gehölz mit Freischneidern eingesetzt.

Die in Antriebsrichtung vorlaufenden Brustschneiden liegen außerhalb der Mittelebene des Schneidblattes, wobei die Schneidzähne abwechselnd zur einen oder anderen Seitenfläche des Schneidblattes versetzt liegen. So bilden die einen Schneidzähne mit ihren Brustschneiden auf der einen Seitenfläche des Schneidblattes einen Flugkreis aus und die benachbarten, anderen Schneidzähne mit ihren Brustschneiden einen weiteren Flugkreis auf der anderen Seitenfläche des Schneidblattes.

Beim Arbeiten mit derartigen Schneidblättern besteht die Gefahr, dass loses Gut, kleine Steine oder dgl. von den Brustschneiden auf der einen oder auf der anderen Seitenfläche erfasst und weggeschleudert werden. Darüber hinaus kann es vorkommen, dass beim Schneiden mit den Brustschneiden auf der oberen Seitenfläche des Schneidblattes die auf der unteren Seitenfläche liegenden Brustschneiden in das Erdreich eindringen und entsprechend Erde, Staub und dgl. aufwirbeln. Dies führt einerseits zu einer entsprechenden Reaktion am Freischneider, die der Benutzer ausgleichen muss und andererseits zu erheblichen Sichtbehinderungen durch die aufgewirbelte Erde, Staub oder dgl..

Der Erfindung liegt die Aufgabe zugrunde, ein Schneidblatt für einen handgeführten Freischneider mit einem Antriebsmotor derart auszubilden, dass bei guter Schnittleistung die Kollisionsgefahr der Schneiden mit dem Boden verringert ist.

Die Aufgabe wird erfindungsgemäß nach den kennzeichnenden Merkmalen des Anspruchs 1 gelöst.

Erfindungsgemäß ist vorgesehen, dass mehrere Schneidspitzen der in Umfangsrichtung aufeinanderfolgenden Schneidzähne in einer gemeinsamen Ebene liegen, so dass die Schnittebene des Schneidblattes auf eine Hauptebene reduziert ist. Vorteilhaft liegen alle Schneidspitzen des Schneidblattes in dieser gemeinsamen Ebene, so dass nur eine einzige Schnittebene ausgebildet ist, in der eine Kollision mit dem Boden, losem Gut oder dgl. erfolgen kann.

Überraschend hat sich gezeigt, dass die Anordnung aller Schneidspitzen des Schneidblattes in einer gemeinsamen Ebene eine gute Schnittleistung bei geringer Kollisionsneigung aufweist. Da auch die Gefahr des Bodenkontaktes der Schneidzähne reduziert ist, zeigt das erfindungsgemäße Schneidblatt einen verringerten Verschleiß.

Vorteilhaft ist die gemeinsame Ebene die Mittelebene des Schneidblattes, so dass bei einem Bodenkontakt im Wesentlichen der Grundkörper des Schneidblattes aufsetzt, sofern das Schneidblatt im Wesentlichen horizontal zum Boden bewegt wird. Selbst bei einer Schrägstellung wurde festgestellt, dass die Kollisionsneigung des Schneidblattes mit dem Boden im Gebrauch signifikant geringer ist als mit Schneidblättern, die mehrere Schnittebenen ausbilden.

Eine gute Führung des Schneidblattes wird erreicht, wenn alle Schneidspitzen auf einem gemeinsamen Flugkreis liegen und/oder die in Umfangsrichtung sich erstreckenden Dachschneiden, vorteilhaft alle Dachschneiden, im Wesentlichen in der Ebene der Schneidspitzen liegen.

Der Anschliff der Brustschneide von einer Seitenfläche des Schneidblattes aus führt zu einer an die Brustschneide anschließenden Fläche, die vorteilhaft unter einem Winkel von etwa 45° zum Grundkörper des Schneidzahnes liegt. Entsprechend bildet sich beim Anschliff der Dachschneide eine Fläche aus, die zweckmäßig ebenfalls unter einem Winkel von etwa 45° zum Grundkörper des Schneidzahnes liegt.

Der zwischen der Schneidkante der Brustschneide und der Schneidkante der Dachschneide eingeschlossene Winkel beträgt etwa 50° bis 70°; bevorzugt laufen die Dachschneide und die Brustschneide keilförmig unter Ausbildung der Schneidspitze derart aufeinander zu, dass der Winkel etwa 60° bis 65° beträgt, insbesondere 62° beträgt.

Für ein gutes Schnittergebnis liegt die Brustschneide zu einer Radialen durch die Schneidspitze unter einem Spanwinkel von 15° bis 20°, insbesondere einem Spanwinkel von 17°.

Für einen gleichmäßigen, ruhigen Lauf des Schneidblattes ist es vorteilhaft, in Umfangsrichtung aufeinanderfolgende Schneidzähne in unterschiedlichen Richtungen abwechselnd aus der Mittelebene des Schneidblattes abzubiegen.

Weitere Merkmale der Erfindung ergeben sich aus den weiteren Ansprüchen, der Beschreibung und der Zeichnung, in der nachfolgend ein im Einzelnen beschriebenes Ausführungsbeispiel der Erfindung dargestellt ist. Es zeigen:
- Fig. 1: in schematischer Darstellung ein von einer Bedienungsperson geführtes Freischneidegerät,
- Fig. 2: eine perspektivische Ansicht des Schneidblattes des Freischneidegerätes nach Fig. 1,
- Fig. 3: eine vergrößerte Ansicht eines Schneidzahns nach Detail III in Fig. 2,
- Fig. 4: einen Schnitt durch den Grundkörper eines Schneidzahns längs der Linie IV-IV in Fig. 3,
- Fig. 5: einen Schnitt durch den Grundkörper eines Schneidzahns längs der Linie V-V in Fig. 3,
- Fig. 6: eine Teilansicht auf den Umfang des Schneidblattes nach Fig. 2 in einer Arbeitsstellung zum Boden,
- Fig. 7: eine Teilansicht auf den Umfang des Blattes nach Fig. 2.

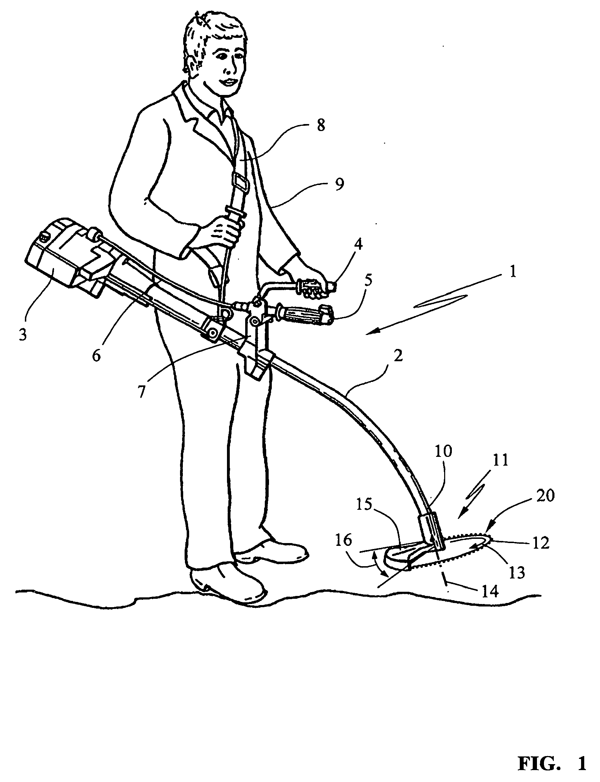

Der in Fig. 1 dargestellte Freischneider 1 besteht im Wesentlichen aus einem Führungsrohr 2, das im Ausführungsbeispiel als gebogenes Führungsrohr ausgeführt ist. Das gebogene Führungsrohr 2 kann auch als langgestrecktes gerades Führungsrohr ausgebildet sein.

An dem hinteren Ende des Führungsrohrs 2 ist ein Antriebsmotor 3 vorgesehen, der ein Verbrennungsmotor oder ein Elektromotor sein kann. Im gezeigten Ausführungsbeispiel ist der Antriebsmotor 3 ein Verbrennungsmotor, der über in Handgriffen 4, 5 vorgesehene Bedienelemente bedient wird. Die Bedienelemente in den Handgriffen 4 und 5 sind z. B. über Bowdenzüge 6 mit den jeweiligen Stellorganen am Antriebsmotor 3 verbunden. Die Handgriffe 4, 5 sind an den Enden einer Lenkerstange 7 angeordnet, die quer zum Führungsrohr 2 liegt und auf diesem festgelegt ist. Über einen Haltegurt 8 wird der Freischneider 1 von einer Bedienungsperson 9 getragen und durch Einwirkung auf die Lenkerstange 7 geführt.

An dem anderen, unteren Ende 10 des Führungsrohrs 2 ist ein Werkzeugkopf 11 montiert, der im gezeigten Ausführungsbeispiel ein Schneidblatt 20 antreibt, welches insbesondere als Grasschneidblatt 12 ausgeführt ist, mit dem Gras, Gestrüpp und auch jüngeres Gehölz gemäht werden kann.

Das als Grasschneidblatt 12 ausgeführte Schneidblatt wird in Antriebsrichtung 13 um eine Drehachse 14 rotierend angetrieben. Am Werkzeugkopf 11 ist ferner eine Schutzhaube 15 nach Art eines Schutzbleches angeordnet, welche das Schneidblatt über einen Umfangswinkel 16 zum Benutzer hin abdeckt.

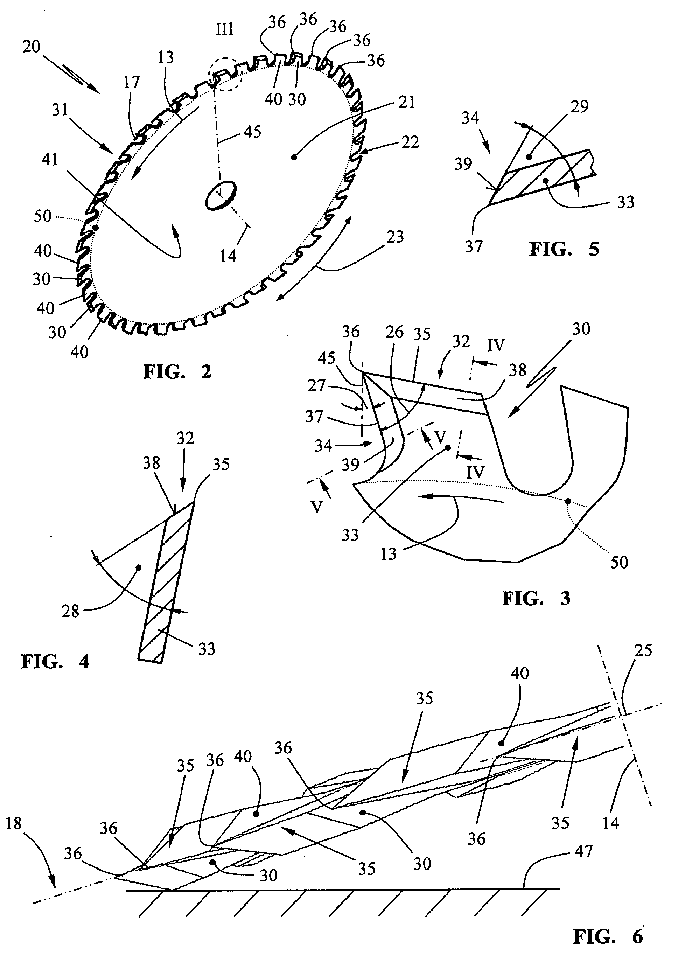

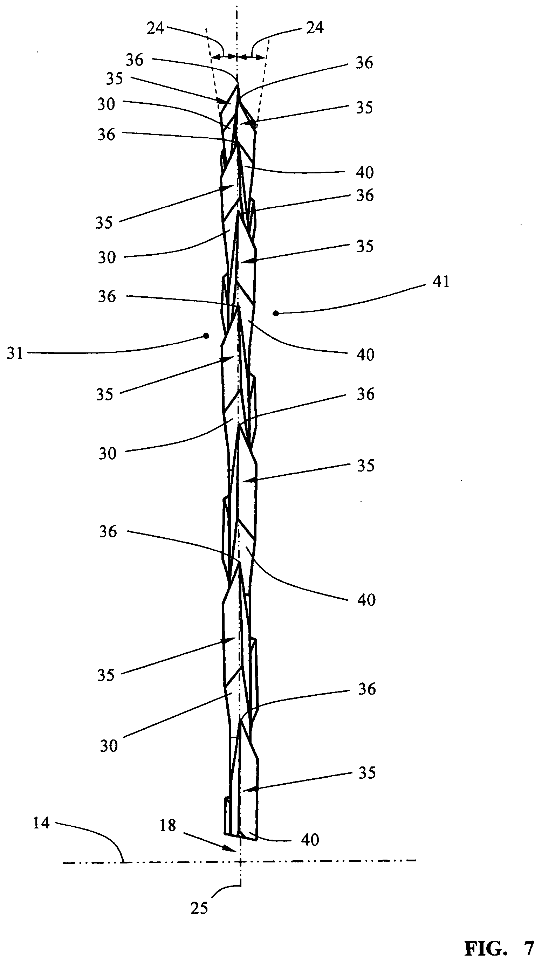

Das als Grasschneidblatt ausgebildete Schneidblatt 20 ist perspektivisch in Fig. 2 dargestellt und besteht im Wesentlichen aus einem scheibenförmigen Grundkörper 21, an dessen äußerem Umfang 22 Schneidzähne 30 und 40 angeordnet sind. Jeder Schneidzahn ist - wie Fig. 7 zeigt - um einen gleichen Winkel 24 aus der Mittelebene 25 längs einer umlaufenden, kreisförmigen Biegelinie 50 abgebogen, wobei die Schneidzähne 30 zu der einen Seitenfläche 31 des Grundkörpers 21 und die Schneidzähne 40 zu der anderen Seitenfläche 41 des Grundkörpers 21 abgebogen sind. Die in Umfangsrichtung 23 aufeinanderfolgenden Schneidzähne 30 und 40 eines nach Art eines Sägeblattes ausgebildeten Schneidblattes 20 sind somit in unterschiedlichen Richtungen abwechselnd aus der Mittelebene 25 des Schneidblattes 20 abgebogen.

Jeder Schneidzahn 30, 40 ist von einer Seitenfläche 31, 41 des Schneidblattes 20 her angeschliffen. Die zur Seitenfläche 31 abgebogenen Schneidzähne 30 sind von der Seitenfläche 31 her angeschliffen; die in Umfangsrichtung 23 benachbarten, zur Seitenfläche 41 abgebogenen Schneidzähne 40 sind von der Seitenfläche 41 her angeschliffen. Am Beispiel des Schneidzahns 30 in Fig. 3 wird die Form, der Anschliff und die Gestaltung eines Schneidzahns 30 beschrieben. Der Schneidzahn 40 ist - mit seinen Anschliffen der Seitenfläche 41 zugewandt - entsprechend gleich ausgebildet.

Jeder Schneidzahn hat einen Grundkörper 33 mit einer Umfangskante 32 und einer in Antriebsrichtung 13 vorlaufenden Radialkante 34. Der Schneidzahn 30 wird - von der Seitenfläche 31 her - an der Umgangskante 32 und der Radialkante 34 angeschliffen, so dass sich eine Dachschneide 35 und eine in Antriebsrichtung 13 vorlaufende Brustschneide 37 ausbildet. Dabei bilden der Anschliff der Umfangskante 32 eine Fläche 38 und der Anschliff an der Radialkante 34 eine Fläche 39. Die beiden Flächen 38 und 39 laufen keilförmig aufeinander zu, wobei die Dachschneide 35 und die Brustschneide 37 eine Schneidspitze 36 ausbilden. Die Schneidspitze läuft in Antriebsrichtung 13 sowohl der Brustschneide 37 als auch der Dachschneide 35 vor.

Wie die Figuren 4 und 5 zeigen, bildet der Anschliff der Dachschneide 35 eine Fläche 38 aus, die unter einem Winkel 28 von etwa 45° zum Grundkörper 33 des Schneidzahns 30 liegt. Entsprechend bildet der Anschliff der Brustschneide 37 eine Fläche 39 aus, die unter einem Winkel 29 von etwa 45° zum Grundkörper 33 des Schneidzahns 30 liegt. Andere Ausbildungen der Winkel 38 und 39 können zweckmäßig sein.

Der zwischen der Schneidkante der Brustschneide 37 und der Schneidkante der Dachschneide 35 eingeschlossene Winkel 26 hat eine Größe von etwa 50° bis 70°; im Ausführungsbeispiel ist der Winkel 26 mit etwa 60° bis 65° ausgebildet, insbesondere mit 62° gestaltet.

Die Schneidkante der Brustschneide 37 bildet mit einer Radialen 45 durch die Schneidspitze 36 einen Spanwinkel 27 von etwa 15° bis 20°; im Ausführungsbeispiel ist ein Spanwinkel 27 von 17° vorgesehen.

Die Schneidspitzen 36 der Schneidzähne 30, 40 sind derart ausgeführt, dass mehrere Schneidspitzen 36 der in Umfangsrichtung 23 aufeinanderfolgenden Schneidzähne 30, 40 in einer gemeinsamen Ebene 18 (Fig. 6, 7) liegen. Im Ausführungsbeispiel sind alle Schneidspitzen 36 der Schneidzähne 30, 40, also alle Schneidspitzen 36 des Schneidblattes 20, in einer gemeinsamen Ebene 18 liegend angeordnet. Im Ausführungsbeispiel ist die gemeinsame Ebene 18 zugleich die Mittelebene 25 des Schneidblattes 20 selbst. Dabei kann die Anordnung in Weiterbildung der Erfindung so gestaltet sein, dass darüber hinaus alle Schneidspitzen 36 auf einem gemeinsamen Flugkreis 17 liegen, wie in Fig. 2 angedeutet ist. In vorteilhafter Ausgestaltung ist ergänzend vorgesehen, dass die in Umfangsrichtung 23 sich erstreckenden Dachschneiden 35 im Wesentlichen in der Ebene 18 der Schneidspitzen 36 liegen.

Wie Fig. 6 zeigt, ist die Gefahr eines Kontaktes der Schneidzähne 30, 40 mit dem Boden 47 selbst bei Schrägstellung des Schneidblattes 20 reduziert. Die Anordnung aller Schneidspitzen 36 des Schneidblattes 20 in einer gemeinsamen Ebene 18 gewährleistet bei guter Schnittleistung eine geringe Kollisionsneigung mit dem Boden 47 oder auf dem Boden liegender Objekte, z. B. Erdklumpen, Steine oder dgl.. Zweckmäßig ist die gemeinsame Ebene 18 die Mittelebene 25 des Schneidblattes 20, so dass bei einem Kontakt mit dem Boden 47 im Wesentlichen der Grundkörper des Schneidblattes 20 oder der Schneidzähne 30, 40 aufsetzt, wie in Fig. 6 schematisch dargestellt. Selbst bei der in Fig. 6 dargestellten Schrägstellung des Schneidblattes 20 zum Boden 47 ist die Kollisionsneigung der Schneidspitzen 36 mit dem Boden 47 signifikant geringer ist als mit bekannten Schneidblättern, die mehrere mit Abstand zur Mittelebene liegende Schnittebenen zeigen. Dadurch ist auch der Verschleiß des erfindungsgemäßen Schneidblattes 20 bzw. seiner Schneidzähne 30, 40 deutlich reduziert, so dass mit dem erfindungsgemäß ausgebildeten Schneidblatt 20 signifikant höhere Standzeiten (längere Betriebszeiten) erzielt werden.

## Patentansprüche

1. Schneidblatt für einen handgeführten Freischneider mit einem Antriebsmotor, bestehend aus einem scheibenartigen Grundkörper (21) mit an dessen Umfang angeordneten Schneidzähnen (30, 40), wobei jeder Schneidzahn (30, 40) eine in Antriebsrichtung (13) vorlaufende, sich etwa radial erstreckende Brustschneide (37) und eine sich in Umfangsrichtung (23) erstreckende Dachschneide (35) aufweist, und die Brustschneide (37) sowie die Dachschneide (35) unter Bildung einer Schneidkante abwechselnd von der einen und der anderen Seite (31, 41) des Schneidblattes (20) angeschliffen sind, wobei die Brustschneide (37) und die Dachschneide (35) eine gemeinsame, in Antriebsrichtung (13) vorlaufende Schneidspitze (36) ausbilden,
**dadurch gekennzeichnet, dass** mehrere Schneidspitzen (36) der in Umfangsrichtung (23) aufeinanderfolgenden Schneidzähne (30, 40) in einer gemeinsamen Ebene (18) liegen.

2. Schneidblatt nach Anspruch 1,
**dadurch gekennzeichnet, dass** alle Schneidspitzen (36) aller Schneidzähne (30, 40) des Schneidblattes (20) in einer gemeinsamen Ebene (18) liegen.

3. Schneidblatt nach Anspruch 1 oder 2,
**dadurch gekennzeichnet, dass** die gemeinsame Ebene (18) die Mittelebene (25) des Schneidblattes (20) ist.

4. Schneidblatt nach einem der Ansprüche 1 bis 3,
**dadurch gekennzeichnet, dass** alle Schneidspitzen (36) auf einem gemeinsamen Flugkreis (17) liegen.

5. Schneidblatt nach einem der Ansprüche 1 bis 4,
**dadurch gekennzeichnet, dass** die in Umfangsrichtung (31) sich erstreckenden Dachschneiden (35) im Wesentlichen in der Ebene (18) der Schneidspitzen (36) liegen.

6. Schneidblatt nach einem der Ansprüche 1 bis 5,
**dadurch gekennzeichnet, dass** der Anschliff der Brustschneide (37) eine Fläche (39) ausbildet, die unter einem Winkel (29) von etwa 45° zum Grundkörper (33) des Schneidzahns (30, 40) liegt.

7. Schneidblatt nach einem der Ansprüche 1 bis 6,
**dadurch gekennzeichnet, dass** der Anschliff der Dachschneide (35) eine Fläche (38) ausbildet, die unter einem Winkel (28) von etwa 45° zum Grundkörper (33) des Schneidzahns (30, 40) liegt.

8. Schneidblatt nach einem der Ansprüche 1 bis 7,
**dadurch gekennzeichnet, dass** der zwischen der Schneidkante der Brustschneide (37) und der Schneidkante der Dachschneide (35) eingeschlossene Winkel (26) etwa 50° bis 70° beträgt.

9. Schneidblatt nach Anspruch 8,
**dadurch gekennzeichnet, dass** der Winkel (26) etwa 60° bis 65° beträgt, insbesondere 62° beträgt.

10. Schneidblatt nach einem der Ansprüche 1 bis 9,
**dadurch gekennzeichnet, dass** die Brustschneide (37) mit einer Radialen (45) durch die Schneidspitze (36) einen Spanwinkel (27) von 15° bis 20° ausbildet, vorzugsweise einen Spanwinkel (27) von 17° ausbildet.

11. Schneidblatt nach einem der Ansprüche 1 bis 10,
**dadurch gekennzeichnet, dass** in Umfangsrichtung (23) aufeinanderfolgende Schneidzähne (30, 40) des Schneidblattes (20) in unterschiedlichen Richtungen abwechselnd aus der Mittelebene (25) des Schneidblattes (20) abgebogen sind.

## Claims

1. Cutting blade for a handheld strimmer having a drive motor, consisting of a disc-like base body (21) with cutting teeth (30, 40) arranged around the periphery thereof, wherein each cutting tooth (30, 40) has a side plate cutter (37) advancing forward in the drive direction (13) and extending approximately radially, and a roof cutter (35) extending in the peripheral direction (23), and the side plate cutter (37) as well as the roof cutter (35) are ground, with the formation of a cutting edge, alternately from one or the other side (31, 41) of the cutting blade (20), wherein the side plate cutter (37) and the roof cutter (35) form a joint cutting tip (36) advancing in the drive direction (13),
**characterised in that** a plurality of cutting tips (36) of the cutting teeth (30, 40) following one after the other in the peripheral direction (23) lie in a common plane (18).

2. Cutting blade according to claim 1,
**characterised in that** all cutting tips (36) of all cutting teeth (30, 40) of the cutting blade (20) lie in a common plane (18).

3. Cutting blade according to claim 1 or 2,
**characterised in that** the common plane (18) is the centre plane (25) of the cutting blade (20).

4. Cutting blade according to one of claims 1 to 3,
**characterised in that** all cutting tips (36) lie on a common circular path (17).

5. Cutting blade according to one of claims 1 to 4,
**characterised in that** the roof cutters (35) extending in the peripheral direction (31) lie substantially in the plane (18) of the cutting tips (36).

6. Cutting blade according to one of claims 1 to 5,
**characterised in that** the ground part of the side plate cutter (37) forms an area (39) which is at an angle (29) of approximately 45° relative to the base body (33) of the cutting tooth (30, 40).

7. Cutting blade according to one of claims 1 to 6,
**characterised in that** the ground part of the roof cutter (35) forms an area (38) which is at an angle (28) of approximately 45° relative to the base body (33) of the cutting tooth (30, 40).

8. Cutting blade according to one of claims 1 to 7,
**characterised in that** the angle between the cutting edge of the side plate cutter (37) and the cutting edge of the roof cutter (35) is approximately 50° to 70°.

9. Cutting blade according to claim 8,
**characterised in that** the angle (26) is approximately 60° to 65°, in particular 62°.

10. Cutting blade according to one of claims 1 to 9,
**characterised in that** the side plate cutter (37) with a radial (45) through the cutting tip (36) forms a rale angle (27) of 15° to 20°, preferably a rake angle (27) of 17°.

11. Cutting blade according to one of claims 1 to 10,
**characterised in that** cutting teeth (30, 40) following one after the other in the peripheral direction (23) are bent away in different directions alternately from the centre plane (25) of the cutting blade (20).

## Revendications

1. Lame de coupe pour une débroussailleuse à main avec un moteur d'entraînement, composée d'un corps de base en forme de disque (21) avec des dents de coupe (30, 40) disposées sur sa circonférence, étant précisé que chaque dent de coupe (30, 40) présente un tranchant frontal (37) qui s'étend à l'avant, dans le sens d'entraînement (13), et à peu près radialement, et un tranchant en forme de toit (35) qui s'étend dans le sens circonférentiel (23), et que le tranchant frontal (37) et le tranchant en forme de toit (35) sont affûtés en alternance d'un côté et de l'autre (31, 41) de la lame de coupe (20) en formant une arête de coupe, étant précisé que le tranchant frontal (37) et le tranchant en forme de toit (35) forment une pointe de coupe commune (36) qui s'étend à l'avant, dans le sens d'entraînement (13),
**caractérisée en ce que** plusieurs pointes de coupe (36) des dents de coupe (30, 40) qui se suivent dans le sens circonférentiel (23) sont situées dans un plan commun (18).

2. Lame de coupe selon la revendication 1,
**caractérisée en ce que** toutes les pointes de coupe (36) de toutes les dents de coupe (30, 40) de la lame de coupe (20) sont situées dans un plan commun (18).

3. Lame de coupe selon la revendication 1 ou 2,
**caractérisée en ce que** le plan commun (18) est le plan médian (25) de la lame de coupe (20).

4. Lame de coupe selon l'une des revendications 1 à 3,
**caractérisée en ce que** toutes les pointes de coupe (36) sont situées sur un cercle de rotation commun (17).

5. Lame de coupe selon l'une des revendications 1 à 4,
**caractérisée en ce que** les tranchants en forme de toit (35) qui s'étendent dans le sens circonférentiel (31) sont situés globalement dans le plan (18) des pointes de coupe (36).

6. Lame de coupe selon l'une des revendications 1 à 5,
**caractérisée en ce que** la partie affûtée du tranchant frontal (37) forme une surface (39) qui s'étend suivant un angle (29) d'environ 45° par rapport au corps de base (33) de la dent de coupe (30, 40).

7. Lame de coupe selon l'une des revendications 1 à 6,
**caractérisée en ce que** la partie affûtée du tranchant en forme de toit (35) forme une surface (38) qui s'étend suivant un angle (28) d'environ 45° par rapport au corps de base (33) de la dent de coupe (30, 40).

8. Lame de coupe selon l'une des revendications 1 à 7,
**caractérisée en ce que** l'angle (26) défini entre l'arête de coupe du tranchant frontal (37) et l'arête de coupe du tranchant en forme de toit (35) est d'environ 50° à 70°.

9. Lame de coupe selon la revendication 8,
**caractérisée en ce que** l'angle (26) est d'environ 60° à 65°, en particulier de 62°.

10. Lame de coupe selon l'une des revendications 1 à 9,
**caractérisée en ce que** le tranchant frontal (37) forme avec un rayon (45) traversant la pointe de coupe (36) un angle de coupe (27) de 15° à 20°, de préférence un angle de coupe (27) de 17°.

11. Lame de coupe selon l'une des revendications 1 à 10,
**caractérisée en ce que** les dents de coupe (30, 40) de la lame de coupe (20) qui se suivent dans le sens circonférentiel (23) sont courbées en alternance dans des sens différents hors du plan médian (25) de la lame de coupe (20).
